Europäisches Patentamt

European Patent Office

Office européen des brevets

(19)

(11) Numéro de publication: **0 374 334 B1**

(12) **FASCICULE DE BREVET EUROPEEN**

(45) Date de publication de fascicule du brevet: **02.12.92**

(51) Int. Cl.5: **B23D 29/00**, G21C 19/10, G21F 7/06, B25J 15/00

(21) Numéro de dépôt: **88420432.2**

(22) Date de dépôt: **22.12.88**

(54) **Dispositif de coupe, tel que cisaille, a commande hydraulique.**

(43) Date de publication de la demande:
**27.06.90 Bulletin 90/26**

(45) Mention de la délivrance du brevet:
**02.12.92 Bulletin 92/49**

(84) Etats contractants désignés:
**BE DE ES GB IT**

(56) Documents cités:
EP-A- 0 171 698          WO-A-87/01672
DE-A- 2 609 689          DE-A- 2 910 544
FR-A- 2 503 000          US-A- 3 816 874

(73) Titulaire: **AMGA**
**247 route de Genas**
**F-69100 Villeurbanne(FR)**

(72) Inventeur: **Armand, Michel**
**Allée des Jonquilles**
**F-69880 Jonage(FR)**

(74) Mandataire: **Laurent, Michel et al**
**Cabinet LAURENT et CHARRAS, 20, rue Louis**
**Chirpaz B.P. 32**
**F-69131 Ecully Cedex(FR)**

## Description

La présente invention concerne un dispositif de coupe perfectionné, à commande hydraulique, et plus particulièrement un nouveau type de cisaille dans lesquelles les deux lames coupantes sont actionnées par la tige d'un vérin hydraulique.

De tels types de cisailles sont commercialisés depuis fort longtemps et sont constitués, comme cela ressort notamment du DT-OS-2 609 689, du FR-A-2 503 000, voire même du brevet US-A-3 816 874 de deux lames coupantes articulées autour d'un axe commun et qui sont montées sur une chape solidaire du corps du vérin, l'ouverture et la fermeture desdites lames lors de l'opération de coupe étant provoquées par l'intermédiaire d'un système à biellettes commandées directement par la tige dudit vérin.

De telles cisailles qui sont utilisées dans de nombreux domaines, notamment pour découper des tubes, tôles.., nécessitent pour leur utilisation certaines précautions, notamment en ce qui concerne le positionnement et le maintien de l'objet à découper par rapport aux lames afin que ces dernières exercent leur action bien perpendiculairement à la surface dudit objet.

Par ailleurs, dans certains domaines tels que par exemple le domaine nucléaire, on peut être amené à utiliser des outils montés sur des robots commandés à distance, par exemple lorsque l'on souhaite réaliser le démantèlement de cellules contaminées. L'adaptation des cisailles antérieures pour une telle utilisation pose de nombreux problèmes, notamment par le fait qu'il doit être possible de modifier le positionnement des lames dans l'espace en fonction de celui des tubes (ou autres éléments à découper) à l'intérieur de l'enceinte.

Par ailleurs, le DE-A-2 910 544 (ou US-A-4 283 851) décrit un dispositif de coupe qui comporte, disposés latéralement par rapport aux lames coupantes, des moyens permettant d'assurer le maintien de l'objet à couper orthogonalement au plan de découpe. Si un tel dispositif permet de couper des câbles, et plus particulièrement des câbles électriques, il ne peut pas être utilisé pour découper des éléments dont les diamètres peuvent varier dans de grandes proportions.

Or, on a trouvé, et c'est ce qui fait l'objet de la présente invention un perfectionnement de tels dispositifs de coupe à commande hydraulique qui permet de résoudre l'ensemble de ces problèmes.

D'une manière générale, le dispositif conforme à l'invention permettant de découper des tubes (ou tout autre élément équivalent) se présente sous la forme d'un ensemble comportant un vérin hydraulique dont la tige actionne un outil de coupe proprement dit, outil constué de deux lames coupantes articulées autour d'un axe commun monté sur une chape solidaire du corps du vérin, l'ouverture et la fermeture desdites lames étant provoquées par l'intermédiaire d'un système à biellettes commandées directement par la tige du vérin, lesdites lames étant associées à une pince disposée latéralement et permettant d assurer le maintien et le positionnement de l'objet à couper, afin qu'il soit maintenu orthogonalement au plan de découpe et il **se caractérise** en ce que :

- la chape portant les lames coupantes est montée sur le corps du vérin par l'intermédiaire de moyens permettant de lui communiquer un mouvement de rotation autour de la tige dudit vérin ;
- une pince disposée latéralement est solidaire de la chape porte-lames, est également commandée par l'intermédiaire d'un vérin hydraulique et est constituée de deux machoires montées pivotantes sur un boitier support fixe fixé à la chape porte-lames, lesdites machoires présentant des surfaces d'appui planes et qui sont découpées à leur extrémité de manière à former "des doigts" pouvant s'interpénétrer permettant ainsi d'assurer le maintien et le positionnement d'éléments (tubes) pouvant avoir des dimensions variables.

Si un tel dispositif peut être manipulé directement par l'utilisateur, il est également particulièrement adapté pour être associé à des moyens permettant de le commander à distance, par exemple à un automate, ledit dispositif étant alors monté de manière pivotante sur l'ensemble permettant d'assurer ses déplacements.

De préférence, les deux mâchoires sont montées articulées autour de l'axe, la commande de l'ouverture et de la fermeture de ces machoires étant obtenue par l'intermédiaire de la tige d'un vérin, l'extrémité de cette tige portant un axe relié au talon des machoires, l'opération de découpe étant réalisée de telle sorte que l'élément à couper (tube) soit positionné entre les machoires ouvertes et, en conséquence, entre les deux lames et que, dans un premier temps, sous l'action dudit vérin, on provoque la fermeture des machoires, donc le blocage et l'immobilisation du tube puis que, sous l'action du vérin, on commande la fermeture des lames coupantes.

L'invention et les avantages qu'elle apporte seront cependant mieux compris grâce à l'exemple de réalisation donné ci-après à titre indicatif et non limitatif, et qui est illustré par les schémas annexés dans lesquels :

- la figure 1 est une vue schématique en perspective montrant les différents éléments constituant un dispositif conforme à l'invention ;
- les figures 2 et 3 sont respectivement des vues en coupe selon les plans A et B de la figure 1 montrant plus en détail la structure et le fonctionnement d'une part, de la pince de maintien que comporte un tel dispositif (fig.2) et, d'autre part, des lames coupantes de la cisaille ;

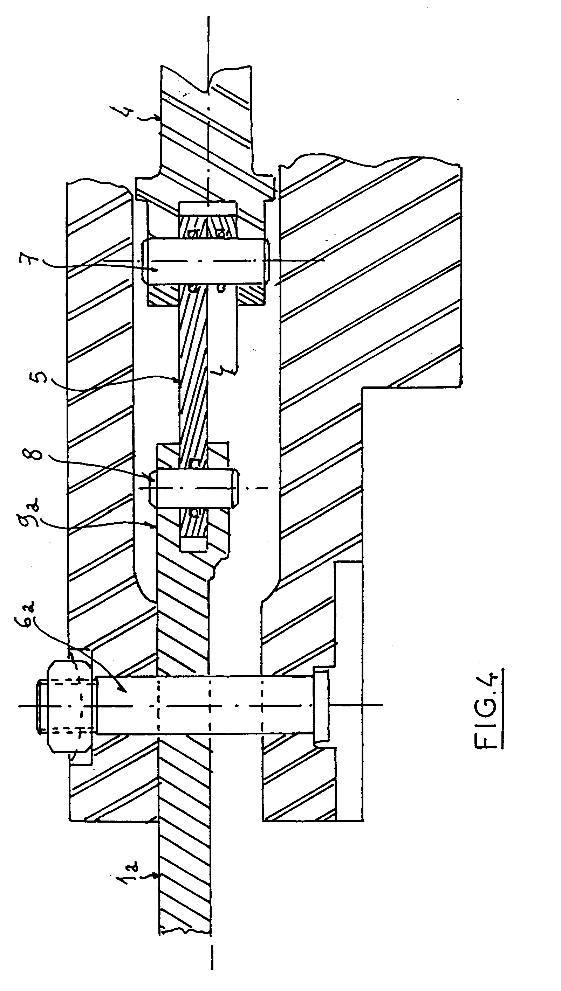

- la figure 4 est une vue de détail en coupe montrant la manière dont est assurée la commande des déplacements des lames de coupe d'un dispositif conforme à l'invention.

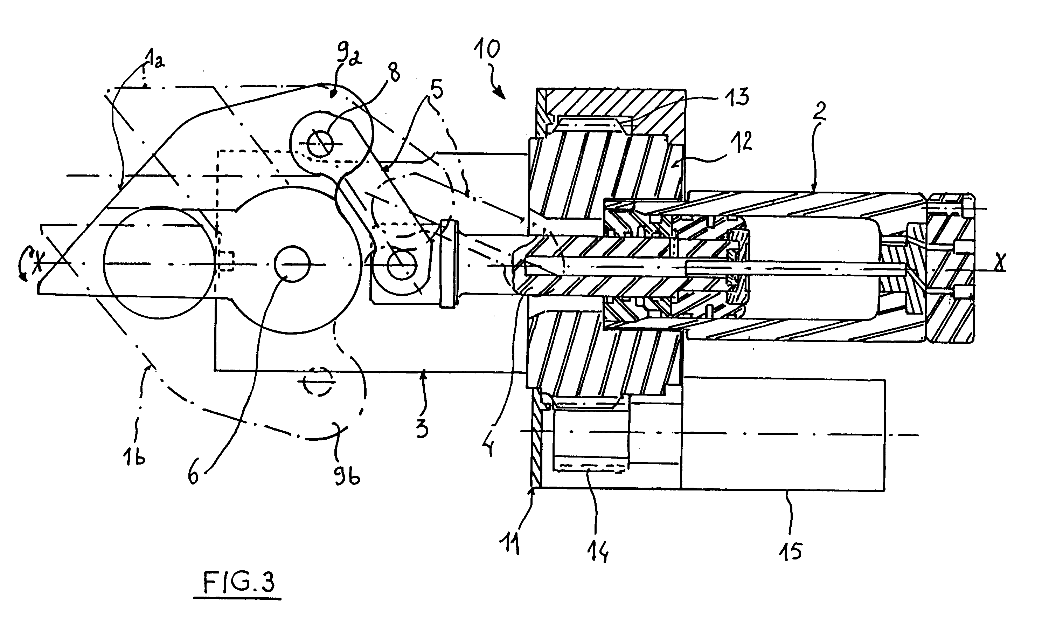

Si l'on se reporte aux schémas annexés, le dispositif de coupe selon l'invention et, dans lequel dans cet exemple de réalisation les organes actifs sont constitués de deux lames (1a,1b) mais qui bien entendu pourraient avoir une autre configuration, par exemple se présenter sous la forme d'une cisaille, se compose essentiellement d'un ensemble comportant un vérin hydraulique (2) dont la tige (4) (voir figure 3) permet d'actionner les deux lames coupantes (1a) et (1b). L'ouverture et la fermeture des lames coupantes (1a) et (1b) est obtenue en montant lesdites lames sur une chape (3), solidaire du corps du vérin (2), les déplacements de la tige (4) dudit vérin commandant un système à biellettes (5) (seule la biellette agissant sur la lame (1a) étant représentée à la figure 3, un système symétrique étant prévu pour actionner la lame inférieure (1b)). Les deux lames (1a,1b) sont montées articulées autour d'un axe commun (6) supporté par la chape (3). Une extrémité (7) des biellettes (5) est reliée à la tige (3) du vérin, l'autre extrémité (8) agissant sur l'extrémité (9a,9b) de chacune des mâchoires (1a,1b).

Conformément à l'invention, la chape (3) portant les lames (1a,1b) est montée sur le corps (2) du vérin par l'intermédiaire d'un ensemble désigné par la référence générale (10) permettant de lui communiquer un mouvement de rotation autour de l'axe longitudinal XX de la tige du vérin.

Pour ce faire, l'ensemble (10) se présente essentiellement sous la forme d'un boitier fixe (11) à l'intérieur duquel est disposé un bloc (12) faisant partie intégrante de la chape (3), comportant une denture périphérique (13) sur laquelle vient s'engrener un moyen de transmission (4) commandé par un moteur hydraulique (15). Ce moteur (15) permet donc d'entraîner en rotation le bloc (12) et en conséquence, la chape (3) portant les lames de coupe. Le bloc (12) est monté autour du corps du vérin (2) qui lui est fixe. L'alimentation en fluide pour la commande et le déplacement de la tige du vérin est réalisée de manière conventionnelle et ne sera pas décrite en détail, une telle alimentation ressortant clairement de la figure 3.

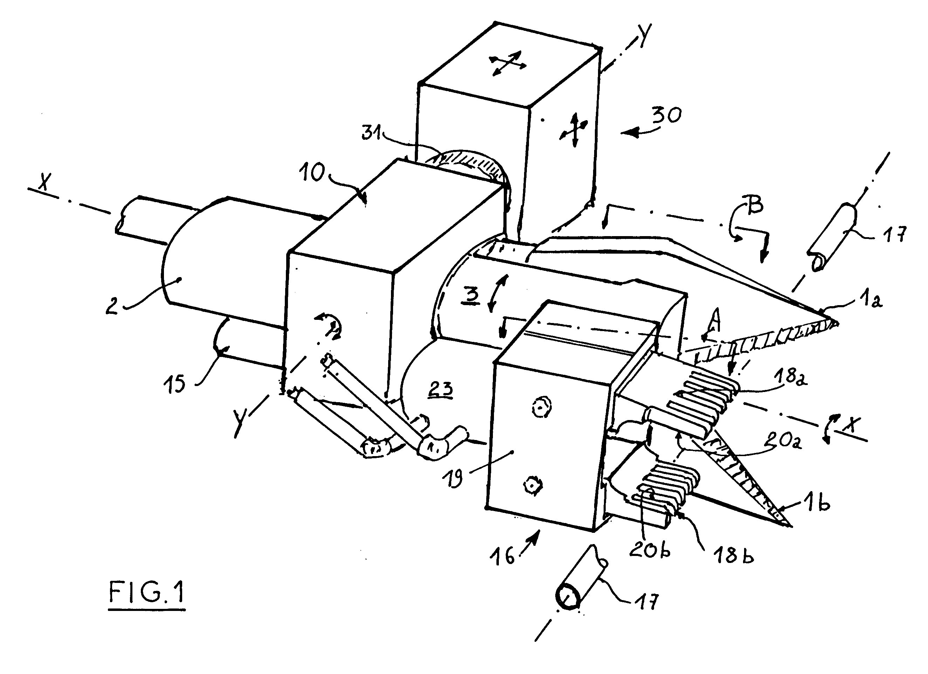

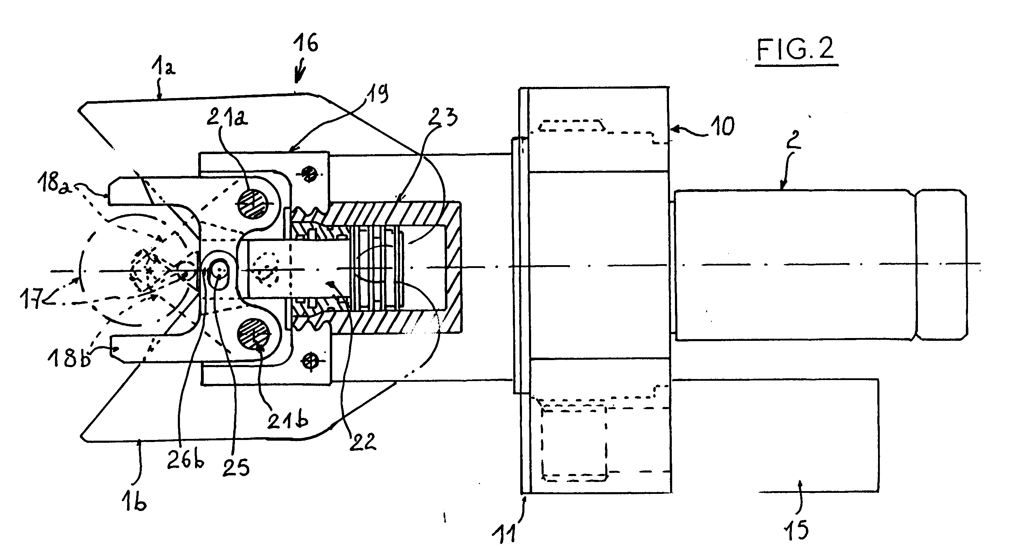

Par ailleurs, conformément à l'invention, la chape (3) portant les lames (1a,1b) supporte également, latéralement, une pince désignée par la référence générale (16), pince dont la structure et le fonctionnement ressortent clairement des figures 1 et 2.

Cette pince dont la fonction est d'assurer le maintien de l'objet (tube 17 par exemple) à découper est constituée de deux machoires (18a,18b) montées sur un boitier support (19) fixé lui-même sur la chape (3). Ces mâchoires (18a,18b) présentent des surfaces d'appui (20a,20b) planes, ces surfaces étant découpées de manière à former des doigts pouvant s'interpénétrer les uns dans les autres lorsque les mâchoires sont rapprochées l'une de l'autre. Les deux machoires (18a,18b) peuvent prendre deux positions extrêmes telles que représentées à la figure 2, l'une ouverte représentée en traits pleins, l'autre refermée représentée en traits pointillés.

Ces mâchoires permettent d'assurer le maintien de tubes (17) dont les diamètres peuvent donc varier dans de grandes proportions. Ces deux mâchoires (18a,18b) sont montées articulées autour d'axes (21a,21b). La commande de l'ouverture et de la fermeture de ces mâchoires est obtenue par l'intermédiaire de la tige (22) d'un vérin (23). L'extrémité de cette tige (22) porte un axe (25) relié aux talons (26a,26b) des mâchoires (18a,18b). Bien entendu, le vérin (23) est alimenté au moyen de flexibles dont simplement l'arrivée est schématisée à la figure 1.

Le fonctionnement d'un tel dispositif est le suivant.

Lorsque l'on souhaite découper un tube (17), l'ensemble est amené de telle sorte que le tube soit positionné entre les mâchoires ouvertes (18a,18b) et, en conséquence, entre les deux lames (1a,1b). Dans un premier temps, sous l'action du vérin (23) on provoque la fermeture des mâchoires (18a,18b), donc le blocage et l'immobilisation du tube (17). Cela étant fait et sous l'action du vérin (2), on commande la fermeture des lames coupantes (1a,1b).

Pendant cette opération de découpe, le tube est parfaitement maintenu et positionné par rapport aux lames dont l'action s'exerce bien perpendiculairement à la surface dudit tube.

Un tel dispositif de coupe, s'il peut être utilisé manuellement, est particulièrement adapté pour être associé à un robot, désigné par la référence générale (30) et qui permet de déplacer cet ensemble à l'intérieur d'une enceinte comportant par exemple des canalisations ou conduites que l'on désire supprimer. Dans un tel cas, le dispositif selon l'invention est monté sur le robot (30) par l'intermédiaire du boitier (10). Ce montage est réalisé de telle sorte que ledit boitier (10) puisse pivoter autour de son axe support YY, cela étant obtenu de manière simple par un montage au moyen d'une couronne dentée (31).

Il est donc possible en combinant les mouvements de rotation autour de cet axe YY et autour de l'axe longitudinal XX de découpe, de positionner à la demande les lames (1a,1b) par rapport au tube à sectionner. Bien entendu, le support (30) peut recevoir des déplacements dans tous les sens.

Bien entendu, l'invention n'est pas limitée à l'exemple qui précède mais en couvre toutes les variantes réalisées dans le même esprit. Ansi, s'il est avantageux d'utiliser des vérins hydrauliques, on ne sortirait pas de l'invention en utilisant des vérins pneumatiques. De plus, comme dit précédemment, les lames coupantes pourraient être remplacées par d'autres types d'outils, par exemple être constituées de deux éléments formant tenailles.

**Revendications**

1. Dispositif de coupe, tel que cisaille, à commande hydraulique, se présentant sous la forme d'un ensemble comportant un vérin hydraulique (2) dont la tige actionne un outil de coupe proprement dit, outil constitué de deux lames coupantes (1a,1b) articulées autour d'un axe commun, monté sur une chape (3) solidaire du corps (2) du vérin, l'ouverture et la fermeture desdites lames (1a,1b) étant provoquée par l'intermédiaire d'un système à biellettes (5) commandé directement par la tige (4) du vérin, lesdites lames étant associées à une pince (16) disposée latéralement et permettant d'assurer ie positionnement et le maintien de l'objet (17) à couper, afin qu'il soit maintenu orthogonalement au plan de découpe, **caractérisé** en ce que :
   - la chape (3) portant les lames coupantes (1a,1b) est montée sur le corps du vérin (2) par l'intermédiaire de moyens permettant de lui communiquer un mouvement de rotation autour de la tige dudit vérin ;
   - la pince (16) disposée latéralement est solidaire de la chape (3) porte-lames, est également commandée par un vérin hydraulique (23) et est constituée de deux machoires (18a,18b) montées pivotantes sur un boitier support fixe (19) fixé à la chape (3) porte-lames, lesdites machoires (18a,18b) présentant des surfaces d'appui (20a,20b) planes et qui sont découpées à leur extrémité de manière à former des doigts pouvant s'interpénétrer, permettant d'assurer le maintien et le positionnement d'éléments (tubes) pouvant avoir des dimensions variables.

2. Dispositif selon la revendication 1, caractérisé en ce qu'il est monté, de manière pivotante, sur un ensemble (30) permettant de le déplacer automatiquement.

3. Dispositif selon l'une des revendications 1 et 2, caractérisé en ce que les deux machoires (18a,18b) sont montées articulées autour de l'axe (21a,21b), la commande de l'ouverture et de la fermeture de ces machoires étant obtenue par l'intermédiaire de la tige (22) d'un vérin, l'extrémité de cette tige (22) portant un axe (25) relié au talon (26a,26b) des machoires (18a18b), l'opération de découpe étant réalisée de telle sorte que l'élément à couper (tube 17) soit positionné entre les machoires ouvertes (18a,18b) et en conséquence, entre les deux lames (1a,1b) et que, dans un premier temps, sous l'action dudit vérin (23), on provoque la fermeture des machoires (18a,18b), donc le blocage et l'immobilisation du tube (17) puis que, sous l'action du vérin (2), on commande la fermeture des lames coupantes (1a,1b).

**Claims**

1. A hydraulically controlled cutting device, such as a shearing machine, taking the form of a unit comprising a hydraulic jack (2) whose rod actuates a cutting tool properly so-called, which tool is constituted by two cutter blades (1a,1b) articulated round a common pin on a holder (3) joined to the body (2) of the jack, the opening and closing of the said blades (1a,1b) being produced by a system of link rods (5) directly controlled by the rod (4) of the jack, the said blades being associated with a laterally disposed clamp (16) allowing the object to be cut (17) to be positionned and held so that it is held orthogonally to the cutting plane, characterized in that:
   - the holder (3) carrying the cutter blades (1a,1b) is mounted on the body of the jack (2) via means allowing a rotational motion to be imparted thereto round the rod of the said jack;
   - the laterally disposed clamp (16) is fixed to the blade holder (3), is also controlled by a hydraulic jack (23) and is constituted by two jaws (18a,18b) pivotably mounted on a fixed supporting casing (19) secured to the blade holder (3), the said jaws (18a,18b) having planar bearing surfaces (20a,20b) and which are cut out at their ends so as to form fingers capable of interpenetrating each other allowing elements, (pipes) which may have variable dimensions, to be held and positioned.

2. Device according to claim 1, characterized in that it is pivotably mounted on a unit (30) allowing it to be automatically displaced.

3. Device according to one of claims 1 and 2, characterized in that the two jaws (18a,18b) are articulated round the pin (21a,21b), the actuation for the opening and closing of these jaws being obtained by means of the rod (22) of a jack, the end of this rod (22) carrying a pin (25) connected to the heels (26a,26b) of the jaws (18a,18b), the cutting operation being effected in such a way that the element to be cut (the pipe 17) is positioned between the open jaws (18a,18b) and accordingly between the two blades (1a,1b), and that in a first stage one obtains by the action of the said jack (23) the closing of the jaws (18a,18b) and therefore the locking and immobilization of the pipe (17), and that then the closing of the cutter blades (1a,1b) is actuated by the action of the jack (2).

**Patentansprüche**

1. Schneidevorrichtung, wie nach der Art einer Schere, mit hydraulischem Antrieb, in der Form einer Anordnung mit einem hydraulischen Stellantrieb (2), dessen Stange ein eigentliches Schneidwerkzeug betätigt, ein zwei um eine gemeinsame Achse schwenkbar gelagerte Schneidklingen (1a,1b) umfassendes Werkzeug, das an einem mit dem Körper (2) des Stellantriebes fest verbundenen Gabelbügel (3) montiert ist, wobei das Öffnen und das Schließen der Klingen (1a,1b) mittels eines Systems von Schwenkarmen (5) bewirkt wird, das unmittelbar von der Stange (4) des Stellantriebes gesteuert wird, wobei die Klingen einer seitlich angeordneten Zange (16) zugeordnet sind, welche die Positionierung und das Halten des zu schneidenden Objektes (17) sicherstellen kann, so daß es senkrecht zu der Schneidebene gehalten wird, dadurch gekennzeichnet, daß:

   - Der die Schneidklingen (1a,1b) tragende Gabelbügel (3) über Mittel an dem Körper des Stellantriebes (2) montiert ist, die ihm eine Drehbewegung um die Stange des Stellantriebes verleihen; und
   - die seitlich angeordnete Zange (16) fest mit dem die Klingen tragenden Gabelbügel (3) verbunden ist, gleichfalls von einem hydraulischen Stellantrieb (23) gesteuert ist und aus zwei Backen (18a,18b) gebildet ist, die schwenkbar an einem festen, an dem die Klingen tragenden Gabelbügel (3) fixierten Haltegehäuse montiert sind, wobei die Backen (18a,18b) ebene Auflageflächen (20a,20b) aufweisen und an ihrem äußeren Ende derart ausgeschnitten sind, daß sie Finger bilden, die ineinandergreifen können, was das Halten und das Positionieren von Elementen (Rohre) sicherstellt, die wechselnde Abmaße haben können.

2. Vorrichtung nach Anspruch 1, dadurch gekennzeichnet, daß sie in schwenkbarer Weise an eine Anordnung (30) montiert ist, die es ermöglicht, sie automatisch zu verfahren.

3. Vorrichtung nach Anspruch 1 oder Anspruch 2, dadurch gekennzeichnet, daß die beiden Backen (18a,18b) um die Achse (21a,21b) schwenkbar gelagert sind, wobei das Steuern des Öffnens und des Schließens dieser Backen mittels der Kolbenstange (22) eines Stellantriebes bewirkt wird, wobei das Ende dieser Kolbenstange (22) eine mit der Nase (26a,26b) der Backen (18a,18b) verbundene Achse (25) trägt, wobei der Abschneidvorgang derart realisiert ist, daß das zu schneidende Element (Rohr 17) zwischen den offenen Backen (18a,18b) und dementsprechend zwischen den beiden Klingen (1a,1b) positioniert wird, und daß man dann in einem ersten Takt durch die Wirkung des Stellantriebes (23) das Schließen der Backen (18a,18b) und folglich das Blockieren und Unbeweglichhalten des Rohres (17) bewirkt, bis man dann durch die Wirkung des Stellantriebes (2) das Schließen der Schneidklingen (1a,1b) steuert.

FIG.1

FIG.2

FIG.3

FIG.4